# EUROPÄISCHE PATENTSCHRIFT

(11) **EP 1 475 321 B1**
(45) Veröffentlichungstag und Bekanntmachung des Hinweises auf die Patenterteilung: **17.09.2008**
(21) Anmeldenummer: 04007514.5
(22) Anmeldetag: 29.03.2004
(51) Int. Cl.: B65G 13/10, B62D 65/00, B61B 13/12

(54) **Übergabestation zum Transportieren von Skidrahmen von einem Skidförderer zu einem anderen Skidförderer einer Skidförderline**
Transferring station for moving skids from a conveyor to another in a line of skid-conveyors
Station de transfert pour déplacer des berceaux d'un convoyeur à un autre dans une ligne de convoyeurs de berceaux

(30) Priorität: 03.05.2003 DE 10319859
(43) Veröffentlichungstag der Anmeldung: 10.11.2004
(73) Patentinhaber: Bürener Maschinenfabrik GmbH, 33142 Büren (DE)
(72) Erfinder: Krause, Dieter Dr., 33142 Büren (DE); Peitz, Burkhard, 33129 Delbrück (DE)
(74) Vertreter: Sparing Röhl Henseler Patentanwälte European Patent Attorneys

(56) Entgegenhaltungen:
- EP-A- 0 010 548
- EP-A- 0 564 740
- DE-C- 471 890
- PATENT ABSTRACTS OF JAPAN Bd. 0062, Nr. 20 (M-169), 5. November 1982 (1982-11-05) & JP 57 126305 A (HITACHI KIDEN KOGYO KK), 6. August 1982 (1982-08-06)

## Beschreibung

Die Erfindung betrifft eine Übergabestation zum Transportieren von Skidrahmen von einem Skidförderer zu einem anderen Skidförderer einer Skidförderlinie nach dem Oberbegriff des Anspruchs 1.

Derartige Skidförderlinien mit einer Mehrzahl Skidförderer zur Bildung einer Führungsbahn, die zwei im Abstand voneinander angeordnete und in einer Förderrichtung verlaufende Reihen von Führungselementen aufweist, umfassen Übergabestationen eingangs- und/oder ausgangsseitig einzelne Skidförderer, um die Skidrahmen bei Richtungsänderungen der Skidförderlinie von einem Skidförderer zu einem anderen Skidförderer transportieren zu können. Bekannt sind beispielsweise Hubtische, mit denen die Skidrahmen vertikal zwischen übereinander angeordneten Skidförderern transportiert werden. Ebenfalls bekannt sind Querförderer, mit denen die Skidrahmen horizontal zwischen nebeneinander angeordneten Skidförderern transportiert werden. Die Übergabestationen besitzen dazu vorzugsweise einen jeweils einen Skidrahmen aufnehmenden Führungsbahnabschnitt.

Als nachteilig erwiesen hat sich, daß die Übergabestationen den Förderfluß in seiner Kontinuität stören.

Aus EP-A-0 010 548 ist eine gattungsgemäße Übergabestation mit einer drehbaren Umlenkvorrichtung bekannt, die wahlweise in Wirkrichtung mit Rollenförderern gebracht werden kann und damit als Zu- und Abförderer dient. Die Umlenkvorrichtung stützt sich über eine Lagerung auf einem Rahmen ab, der mittels Stützen mit einem Fundament verbunden ist. Der Rahmen ist kreuzförmig und ist an seiner Oberseite ausgerüstet mit paarig angeordneten Bundrollen für die eine Förderrichtung und mit paarig angeordneten Bundrollen für die andere Förderrichtung. Alle Bundrollen sind über Antriebsvorrichtungen antreibbar und bremsbar.

Aus DE-PS-471 890 ist eine Kreuz-Gelenkdrehscheibe bekannt. Diese weist zwei starr aneinander geschlossene Hauptträgerhälften auf, an die zwei andere Hauptträgerpaare mittels an sich bekannten Gelenken angeschlossen sind.

Aufgabe der Erfindung ist es daher, eine Übergabestation zum Transportieren von Skidrahmen zu schaffen, die eine stabile Kreuz-Rollenbahn liefart.

Diese Aufgabe wird durch die Merkmale des kennzeichnenden Teils des Anspruchs 1 gelöst.

Hierdurch wird eine Übergabestation geschaffen, die eine im Kreis drehende Kreuz-Rollenbahn aufweist, deren Rollenbahnarme fortlaufend abwechselnd als eingangs- und ausgangsseitige Drehbahn arbeiten, wobei durch die Anordnung der jeweiligen Rollen eines Rollenbahnarmes außerhalb des Kreuzungsbereiches eine Nutzung beider Rollenbahnarme in der einen wie in der anderen Richtung möglich ist. Die Ausgangsstellung des einen Rollenbahnarmes kann zudem gleichzeitig die Eingangsstellung des anderen Rollenbahnarmes sein, so daß in jeder Halteposition der Drehbahn ein Skidrahmen ausgefördert und ein anderer eingefördert werden kann. Der Förderfluß wird hierdurch weit geringer behindert als durch Übergabestationen, bei denen Leerfahrten zwischen Transportfahrten einzulegen sind.

Zur Stabilisierung ist der Kreuz-Rollenbahn benachbart zum Drehpunkt einer der sich kreuzenden Rollenbahnarme mit mindestens einer durch den Kreuzungsbereich sich erstreckenden Längsschiene ausgebildet. Vorzugsweise sind die beiden Rollenbahnarme gleich lang ausgebildet und schneiden sich rechtwinklig. Eine fortlaufende Drehung um jeweils nur 90° erlaubt dann eine jeweilige Übergabe eines Skidrahmens von einem Skidförderer zu einem anderen quer dazu verlaufenden Skidförderer.

Vorzugsweise ist die Kreuz-Rollenbahn auf einem Drehgerüst gelagert, das von einem Rahmenkreuz mit endseitig jeweils T-förmigen Rahmenteilen gebildet ist, die als Läufer mittels Rädern an der runden Fahrschiene abgestützt sind. Vorzugsweise ist mindestens eines der Räder eines Rahmenteils angetrieben, um als an der Fahrschiene angreifendes Reibrad eine Drehbewegung der Kreuz-Rollenbahn auszulösen.

Die Rollen der beiden Rollenbahnarme der Kreuz-Rollenbahn sind vorzugsweise für eine gleichzeitige Betätigung mittels einer Antriebsvorrichtung gekoppelt. Das Ausfahrens eines von der Übergabestation aufgenommenen Skidrahmens ist dann automatisch kombinierbar mit dem Einfahren eines aufzunehmenden Skidrahmens. Ferner kann die Vorwärts- und Rückwärtslaufrichtung der Rollen der beiden Rollenbahnarme durch nur jeweils eine Antriebsvorrichtung bewirkt werden, wodurch die Zahl der mit der Kreuz-Rollenbahn bewegten Teile gering gehalten wird.

Weitere Vorteile und Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
- Fig. 1: zeigt schematisch eine seitliche Draufsicht einer Übergabestation gemäß einem ersten Ausführungsbeispiel;
- Fig. 2: zeigt schematisch einen Schnitt nach A-A in Fig. 1;
- Fig. 3: zeigt schematisch eine seitliche Draufsicht einer Übergabestation gemäß einem zweiten Ausführungsbeispiel;
- Fig. 4: zeigt schematisch einen Schnitt nach B-B in Fig. 3.

Die Erfindung betrifft eine Übergabestation zum Transportieren von Skidrahmen von einem Skidförderer zu einem anderen Skidförderer einer Skidförderlinie mit einer Mehrzahl Skidförderer zum Vorschub von Skidrahmen und der darauf montierten Werkstücke, insbesondere Fahrzeugkarosserien. Derartige Skidförderer umfassen Rollenbahnen mit jeweils zwei im Abstand voneinander angeordneten Sätzen von Rollen für Skidkufen von Skidrahmen. Die Rollen der Skidförderer sind zumindest teilweise antreibbar, um die Skidrahmen mit einer Prozeßvorschubgeschwindigkeit in Förderrichtung schieben zu können.

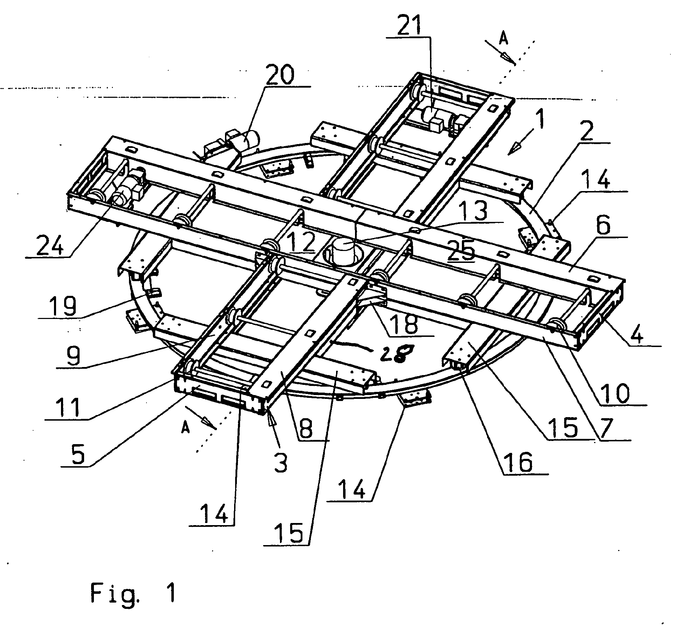

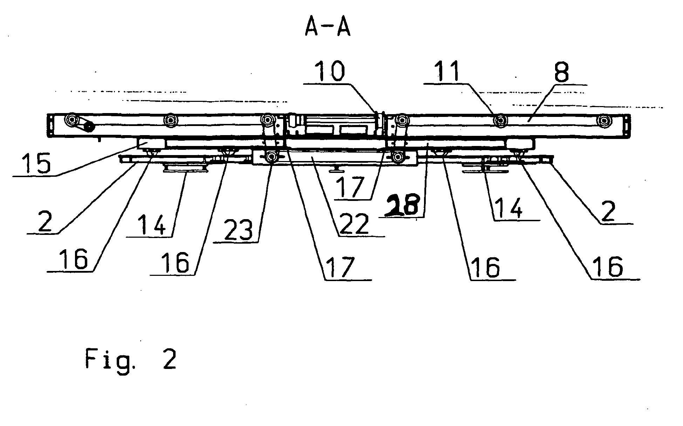

Die Fig. 1 und 2 zeigen ein erstes Ausführungsbeispiel einer Übergabestation zum Transportieren von Skidrahmen zwischen zueinander in einem Winkel verlaufenden Rollenbahnen, wobei die Übergabestation dazu vorgesehen ist, eine Verbindung zu schaffen zwischen zwei beabstandet zueinander angeordneten Skidförderen unterschiedlicher Förderrichtung.

Die Übergabestation wird dazu von einer Drehbahn 1 gebildet, die eine feststehende kreisförmige Fahrschiene 2 umfaßt, auf der eine Kreuz-Rollenbahn 3 mit zwei sich schneidenden Rollenbahnarmen 4, 5 drehbar gelagert ist. Jeder Rollenbahnarm 4, 5 besitzt parallel zueinander verlaufende, eine Förderrichtung bestimmende Längsschienen 6, 7 bzw. 8, 9, an denen parallel zur Förderrichtung hintereinander angeordnete Rollen 10, 11 abgestützt sind. Die Kreuz-Rollenbahn 3 besitzt einen Kreuzungsbereich 12, der durch eine Durchdringung des einen Rollenbahnarmes 4 durch den anderen Rollenbahnarm 5 entsteht. Die Rollen 10, 11 der Rollenbahnarme 4, 5 sind jeweils vor und hinter dem Kreuzungsbereich 12 der Kreuz-Rollenbahn 3 angeordnet. Die Fahrschiene 2 definiert eine gemeinsame Drehebene für die beiden Rollenbahnarme 4, 5. Die Drehebene ist vorzugsweise horizontal kann, jedoch auch geneigt oder vertikal sein.

Die Kreuz-Rollenbahn 3 besitzt einen festen Drehpunkt 13, der vorzugsweise von einem auf einem Aufstellboden abgestützten Zapfen gebildet wird. Gleiches gilt für die Fahrschiene 2, die mittels Halterungen 14 ortsfest auf einem Aufstellboden fixierbar ist. Die Kreuz-Rollenbahn 3 ist über Rahmenteile 15 drehbar auf der Fahrschiene 2 angeordnet. Vorzugsweise ist jeder Rollenbahnarm 4, 5 endseitig jeweils an einem Rahmenteil 15 befestigt, wobei die Rahmenteile 15 sich über Laufräder 16 auf der Laufschiene 2 abstützen. Die Rahmenteile 15 können als voneinander getrennte Stützen ausgebildet sein, da die Kreuz-Rollenbahn 3 durch den festen Drehpunkt 13 gegenüber der Fahrschiene 2 fixiert ist und/oder über Querstreben 25 miteinander verbunden sein, um ein endseitig jeweils T-förmig ausgebildetes Rahmengestell zu bilden. Die Rahmenteile 15 sind vorzugsweise sekantenförmig zur runden Fahrschiene 2 ausgeführt.

Für eine Abstützung der Kreuz-Rollenbahn 3 im Bereich des Drehpunktes 13 besitzt vorzugsweise ein Rollenbahnarm 4 Längsschienen 6, 7, die sich durch den Kreuzungsbereich 12 erstrecken. Die Längsschienen 8, 9 der anderen Rollenbahn 5 können dann freie Enden mit Unterbrechungskanten 17 aufweisen. Zur Fixierung dieser freien Enden können Befestigungsmittel 18 an einer Längsschiene 7, 8 angreifen.

Mindestens ein Laufrad 16 eines der Rahmenteile 15 ist als Reibrad antreibbar. Für den Antrieb ist ein Antriebsmotor 20 vorgesehen, der an dem mindestens einen Laufrad 16 angreift. Zur Steuerung des Antriebes zum Drehen der Kreuz-Rollenbahn 3 ist an der Fahrschiene 2 mindestens eine Endschalterhalterung 19 für einen Endschalter vorgesehen. Hierdurch wird der Drehweg der Kreuz-Rollenbahn gesteuert.

Der Antrieb der Rollen 10, 11 der beiden Rollenbahnarme 4, 5 ist für eine gleichzeitige Betätigung mittels vorzugsweise lediglich einer einzigen Antriebsvorrichtung 21 gekoppelt. Zur Kopplung ist beispielsweise ein Antriebsriemen 22 vorgesehen, der über Umlenkrollen 23 an allen Rollen 10, 11 der beiden Rollenbahnarme 4, 5 angreift. Für eine Vorwärtslaufrichtung der Rollen 10, 11 einerseits und eine Rückwärtslaufrichtung der Rollen 10, 11 andererseits können verschiedene Antriebsvorrichtungen 21, 24 vorgesehen sein.

Die beiden Rollenbahnen 4, 5 sind vorzugsweise gleich lang und schneiden sich rechtwinklig, verlaufen also quer zueinander.

Die Rollen 10, 11 der Rollenbahnarme 4, 5 können von einer Schutzabdeckung 25, 26 abgedeckt sein, welche jeweils der Form der Rollen 10, 11 angepaßte Rollenöffnungen aufweist, aus welcher die Rollen 10, 11 geringfügig überstehen.

Die Kreuz-Rollenbahn 3 bildet abhängig von ihrer Drehposition einen ausgangsseitigen als auch eingangsseitigen Skidförderer zwischen zwei Skidförderern, wobei wählbare Drehwege einstellbar sind.

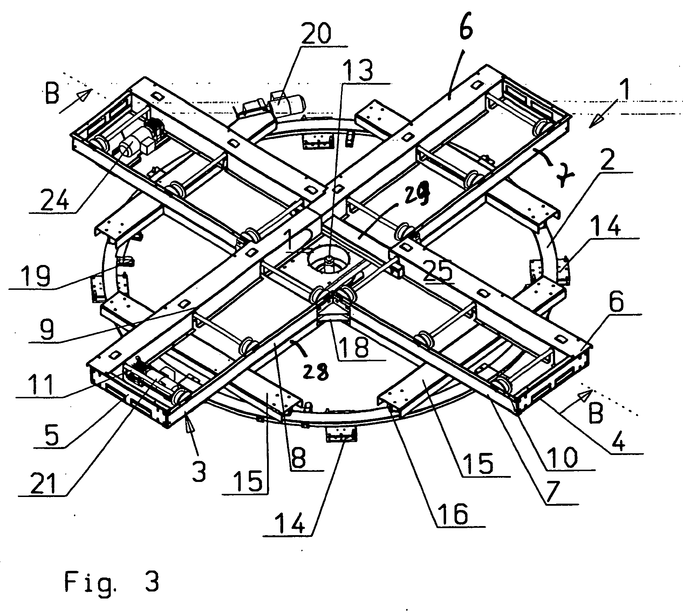

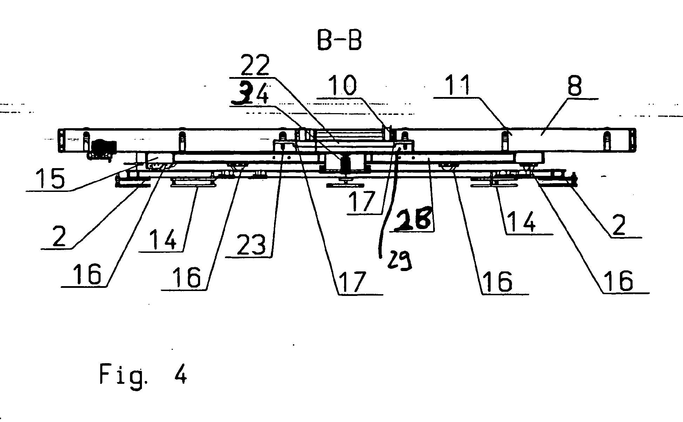

Die Fig. 3 und 4 zeigen ein zweites Ausführungsbeispiel einer Übergabestation, das sich von dem zuvor beschriebenen Ausführungsbeispiel dadurch unterscheidet, daß sich bei einer Rollenbahn 4 nur eine Längsschiene 6 durch den Kreuzungsbereich 12 erstreckt, während die gegenüberliegende Längsschiene 7 ebenso wie die Längsschienen 6, 7 der anderen Rollenbahn 4 im Kreuzungsbereich 12 unterbrochen sind. Im Kreuzungsbereich 12 sind dann durchgehende Querstreben 28 vorgesehen, wobei mit mindestens einem Profil 29 eine Abstandshalterung zwischen zwei Längsschienen 6, 7 einer Rollenbahn erreicht wird. Der Drehpunkt 13 im Kreuzungsbereich 12 besitzt eine stabile Verbindung zum Rahmenkreuz aus Querstreben 28 und Rahmenteilen 15. Im Drehpunkt 13 kann für eine Energieübertragung zum Drehtisch 3 ein Drehschleifringübertrager 34 vorgesehen sein.

Der Antriebsriemen 22 kann oberhalb oder unterhalb des Rahmenkreuzes hindurchgeführt werden. Bei Anordnung oberhalb, gemäß Fig. 4, bleibt unterhalb des bewegten Rahmens Raum für Einbauten wie Kabelkanäle.

## Patentansprüche

1. Übergabestation zum Transportieren von Skidrahmen von einem Skidförderer zu einem anderen Skidförderer einer Skidförderlinie zum Vorschub von Skidrahmen und der darauf montierten Werkstücke, insbesondere Fahrzeugkarosserien, mit einer Mehrzahl Skidförderer, die Rollenbahnen aufweisen mit jeweils zwei im Abstand voneinander angordneten Sätzen von Rollen (10, 11) für Skidkufen von Skidrahmen, zum Transportieren von Skidrahmen zwischen zueinander in einem Winkel verlaufenden Rollenbahnen auf einer Drehbahn (1) mit einer feststehenden kreisförmigen Fahrschiene (2), auf der eine Kreuz-Rollenbahn (3) mit zwei sich schneidenden Rollenbahnarmen (4, 5) drehbar gelagert ist, deren Rollen (10, 11) jeweils vor und hinter einem Kreuzungsbereich (12) der Kreuz-Rollenbahn (3) angeordnet ist, **dadurch gekennzeichnet, daß** jeder Rollenbahnarm (4, 5) parallel zueinander verlaufende, eine Förderrichtung bestimmende Längsschienen (6, 7; 8, 9) besitzt, und für eine Abstützung der Kreuz-Rollenbahn (3) im Bereich des Drehpunktes (13) einer (4) der sich schneidenden Rollenbahnarme (4, 5) mindestens eine Längsschiene (6, 7) besitzt, die sich durch den Kreuzungsbereich (12) erstreckt.

2. Übergabestation nach Anspruch 1, **dadurch gekennzeichnet, daß** freie Enden der Längschienen (8, 9) der anderen Rollenbahn (5) an der mindestens einen Längsschiene (6, 7) des einen Rollenbahnarms (4) angreifen.

3. Übergabestation nach Anspruch 1 oder 2, **dadurch gekennzeichnet, daß** die beiden Rollenbahnarme (4, 5) gleich lang sind und sich rechtwinklig schneiden.

4. Übergabestation nach einem der Ansprüche 1 bis 3, **dadurch gekennzeichnet, daß** die Kreuz-Rollenbahn (3) horizontal drehbar angeordnet ist.

5. Übergabestation nach einem der Ansprüche 1 bis 4, **dadurch gekennzeichnet, daß** die Rollenbahnarme (4, 5) an ihren Enden von Rahmenteilen (15) getragen werden, die verfahrbar an der Fahrschiene (2) geführt sind.

6. Übergabestation nach Anspruch 5, **dadurch gekennzeichnet, daß** für eine Abstützung der Kreuz-Rollenbahn 3 im Bereich des Drehpunktes (13) die Rahmenteile (15) über Querstreben (28) mit dem Kreuzungsbereich (12) verbunden sind.

7. Übergabestation nach Anspruch 6, **dadurch gekennzeichnet, daß** mindestens eine Querstrebe (28) im Kreuzungsbereich (12) durchgehende Profile (29) umfaßt.

8. Übergabestation nach einem der Ansprüche 5 bis 7, **dadurch gekennzeichnet, daß** die Rahmenteile (15) sekantenförmig zur runden Fahrschiene (2) auf dieser geführt sind.

9. Übergabestation nach einem der Ansprüche 5 bis 8, **dadurch gekennzeichnet, daß** die an der Fahrschiene (2) geführten Rahmenteile (15) mit einem Rahmenkreuz ein endseitig jeweils T-förmig ausgebildetes Rahmengestell bilden.

10. Übergabestation nach einem der Ansprüche 5 bis 9, **dadurch gekennzeichnet, daß** die Rahmenteile (15) über Laufräder (16) auf der Fahrschiene (2) verfahrbar geführt sind, wobei mindestens ein Laufrad (16) eines der Rahmenteile (15) als Reibrad antreibbar ist.

11. Übergabestation nach einem der Ansprüche 1 bis 10, **dadurch gekennzeichnet, daß** an der Fahrschiene (2) mindestens eine Endschalterhalterung (19) zur Aufnahme eines Endschalters und Steuern eines Antriebes zum Drehen der Kreuz-Rollenbahn (3) angeordnet ist.

12. Übergabestation nach einem der Ansprüche 1 bis 11, **dadurch gekennzeichnet, daß** der Antrieb der Rollen (10, 11) der beiden Rollenbahnarme (4, 5) gekoppelt ist für eine gleichzeitige Betätigung mittels einer Antriebsvorrichtung (21).

13. Übergabestation nach Anspruch 12, **dadurch gekennzeichnet, daß** für eine Vorwärtslaufrichtung der Rollen (10, 11) einerseits und eine Rückwärtslaufrichtung der Rollen (10, 11) andererseits verschiedene Antriebsvorrichtungen (21, 24) vorgesehen sind.

14. Übergabestation nach einem der Ansprüche 1 bis 13, **dadurch gekennzeichnet, daß** in einem Drehpunkt (13) der Kreuz-Rollenbahn (3) ein Drehschleifringübertrager (34) für eine Energieübertragung einsetzbar ist.

## Claims

1. Transfer station for transporting skid frames from one skid conveyor to another skid conveyor of a skid conveying line for advancing skid frames and the workpieces mounted thereon, in particular vehicle bodies, having a plurality of skid conveyors which have roller trains, each with two spaced-apart sets of rollers (10, 11) for skids of skid frames, by means of which skid frames are transported, between roller trains running at an angle to one another, on a rotary track (1) with a fixed circular running rail (2), on which a cross-shaped roller train (3) with two intersecting roller train arms (4, 5) is rotatably mounted, the rollers (10, 11) of these roller train arms (4, 5) being arranged in each case upstream and downstream of a crossover region (12) of the cross-shaped roller train (3), **characterized in that** each roller train arm (4, 5) has longitudinal rails (6, 7; 8, 9) which run parallel to one another and define a conveying direction and, for supporting the cross-shaped roller train (3) in the region of the point of rotation (13), one (4) of the intersecting roller train arms (4, 5) has at least one longitudinal rail (6, 7) which extends through the crossover region (12).

2. Transfer station according to Claim 1, **characterized in that** the at least one longitudinal rail (6, 7) of the one roller-track arm (4) has free ends of the longitudinal rails (8, 9) of the other roller train (5) acting on it.

3. Transfer station according to Claim 1 or 2, **characterized in that** the two roller train arms (4, 5) are of equal length and intersect one another at a right angle.

4. Transfer station according to one of Claims 1 to 3, **characterized in that** the cross-shaped roller train (3) is arranged for horizontal rotation.

5. Transfer station according to one of Claims 1 to 4, **characterized in that** the roller train arms (4, 5) are borne, at their ends, by frame parts (15) which are guided in a displaceable manner at the running rail (2).

6. Transfer station according to Claim 5, **characterized in that**, for supporting the cross-shaped roller train (3) in the region of the point of rotation (13), the frame parts (15) are connected to the crossover region (12) via transverse struts (28).

7. Transfer station according to Claim 6, **characterized in that** at least one transfer strut (28) comprises continuous profiles (29) in the crossover region (12).

8. Transfer station according to one of Claims 5 to 7, **characterized in that** the frame parts (15) are guided on the circular running rail (2) in secant form in relation to the same.

9. Transfer station according to one of Claims 5 to 8, **characterized in that** the frame parts (15), which are guided at the running rail (2), form, with a frame cross, a framework which is of T-shaped form at the ends in each case.

10. Transfer station according to one of Claims 5 to 9, **characterized in that** the frame parts (15) are displaceably guided on the running rail (2) via running wheels (16), it being possible for at least one running wheel (16) of one of the frame parts (15) to be driven as a frictional wheel.

11. Transfer station according to one of Claims 1 to 10, **characterized in that** the running rail (2) has arranged at it at least one limit-switch holder (19) for accommodating a limit switch and controlling a drive for rotating the cross-shaped roller train (3).

12. Transfer station according to one of Claims 1 to 11, **characterized in that** the rollers (10, 11) of the two roller train arms (4, 5) are coupled in drive terms for simultaneous actuation by means of a drive device (21).

13. Transfer station according to Claim 12, **characterized in that** different drive devices (21, 24) are provided for a forward-running direction of the rollers (10, 11), on the one hand, and a rearward-running direction of the rollers (10, 11), on the other hand.

14. Transfer station according to one of Claims 1 to 13, **characterized in that** use can be made of a slip ring transmitter (34), for power-transmission purposes, in a point of rotation (13) of the cross-shaped roller train (3).

## Revendications

1. Station de transfert pour transporter des cadres à patins depuis un convoyeur à patins vers un autre convoyeur à patins d'un train de convoyeurs à patins pour faire avancer des cadres à patins et les pièces à oeuvrer montées sur ceux-ci, en particulier des carrosseries de véhicules, comportant une pluralité de convoyeurs à patins qui présentent des transporteurs à galets avec chacun deux jeux de galets (10, 11) agencés à distance l'un de l'autre, pour des patins de cadres à patins, pour transporter des cadres à patins entre des transporteurs à galets s'étendant sous un angle l'un par rapport à l'autre sur un transporteur rotatif (1) avec un rail de roulement (2) de forme circulaire fixe sur lequel un transporteur cruciforme à galets (3) est monté rotatif avec deux bras de transporteur à galets (4, 5) qui se coupent, dont les galets (10, 11) sont agencés respectivement devant et derrière une zone de croisement (12) du transporteur cruciforme à galets (3), **caractérisée en ce que** chaque bras de transporteur à galets (4, 5) possède des rails longitudinaux (6, 7 ; 8, 9) s'étendant parallèlement l'un à l'autre et déterminant une direction de convoyage, et pour un soutien du transporteur cruciforme à galets (3) dans la zone du point de rotation (13), un (4) des bras de transporteur à galets (4, 5), qui se coupent, possède au moins un rail longitudinal (6, 7) qui s'étend à travers la zone de croisement (12).

2. Station de transfert selon la revendication 1, **caractérisée en ce que** des extrémités libres des rails longitudinaux (8, 9) de l'autre transporteur à galets (5) s'appliquent sur ledit au moins un rail longitudinal (6, 7) dudit un bras de transporteur à galets (4).

3. Station de transfert selon la revendication 1 ou 2, **caractérisée en ce que** les deux bras de transporteur à galets (4, 5) ont la même longueur et se coupent en angle droit.

4. Station de transfert selon l'une des revendications 1 à 3, **caractérisée en ce que** le transporteur cruciforme à galets (3) est agencé rotatif à l'horizontale.

5. Station de transfert selon l'une des revendications 1 à 4, **caractérisée en ce que** les bras de transporteur à galets (4, 5) sont portés à leurs extrémités par des parties de cadre (15) qui sont guidées de manière à se déplacer sur le rail de roulement (2).

6. Station de transfert selon la revendication 5, **caractérisée en ce que** pour un soutien du transporteur cruciforme à galets (3) dans la région du point de rotation (13), les parties de cadre (15) sont reliées à la zone de croisement (12) par des entretoises (28).

7. Station de transfert selon la revendication 6, **caractérisée en ce qu'**au moins une entretoise (28) comprend des profilés (29) d'un seul tenant dans la zone de croisement (12).

8. Station de transfert selon l'une des revendications 5 à 7, **caractérisée en ce que** les parties de cadre (15) sont guidées sur le rail de roulement (2) rond et sous forme de sécantes par rapport à celui-ci.

9. Station de transfert selon l'une des revendications 5 à 8, **caractérisée en ce que** les parties de cadre (15) guidées sur le rail de roulement (2) forment avec une croix de cadre une ossature réalisée respectivement en forme de T côté extrémité.

10. Station de transfert selon l'une des revendications 5 à 9, **caractérisée en ce que** les parties de cadre (15) sont guidées de manière à se déplacer sur des roulettes (16) sur le rail de roulement (2), au moins une roulette (16) d'une partie de cadre (15) pouvant être entraînée en tant que galet de friction.

11. Station de transfert selon l'une des revendications 1 à 10, **caractérisée en ce que** sur le rail de roulement (2) est agencé au moins une monture (19) d'interrupteur de fin de course pour recevoir un interrupteur de fin de course et pour commander un entraînement pour mettre en rotation le transporteur cruciforme à galets (3).

12. Station de transfert selon l'une des revendications 1 à 11, **caractérisée en ce que** l'entraînement des galets (10, 11) des deux bras de transporteur à galets (4, 5) est couplé pour un actionnement simultané au moyen d'un dispositif d'entraînement (21).

13. Station de transfert selon la revendication 12, **caractérisée en ce que** pour une direction de roulement vers l'avant des galets (10, 11) d'une part et pour une direction de roulement vers l'arrière des galets (10, 11) d'autre part sont prévus différents dispositifs d'entraînement (21, 24).

14. Station de transfert selon l'une des revendications 1 à 13, **caractérisé en ce que** dans un point de rotation (13) du transporteur cruciforme à galets (3) peut être inséré un transmetteur de bague collectrice rotative (34) pour une transmission d'énergie.
